Europäisches Patentamt

European Patent Office

Office européen des brevets

(19)

(11) Publication number: **0 071 858**
A1

# EUROPEAN PATENT APPLICATION

(12)

(21) Application number: **82106719.6**

(22) Date of filing: **24.07.82**

(51) Int. Cl.³: **A 23 K 3/02, A 23 K 3/00**

(30) Priority: **06.08.81 US 290781**

(43) Date of publication of application: **16.02.83**
**Bulletin 83/7**

(84) Designated Contracting States: **AT BE CH DE FR GB IT LI LU NL SE**

(71) Applicant: **MILES LABORATORIES INC., 1127 Myrtle Street, Elkhart Indiana 46514 (US)**

(72) Inventor: **Chang, William Tien Hung, 23488 Greenleaf Boulevard, Elkhart Indiana 46514 (US)**

(74) Representative: **Jesse, Ralf-Rüdiger, Dr. et al, Bayer AG Zentralbereich Patente Marken und Lizenzen, D-5090 Leverkusen, Bayerwerk (DE)**

(54) **Silage preservation with propionic acid producing microorganisms.**

(57) A method for controlling the fermentation of a grass or grain crop to produce silage is disclosed. The method involves applying to the grass or grain propionic acid-producing microorganisms and storing the crop under anaerobic conditions.

EP 0 071 858 A1

SILAGE PRESERVATION WITH PROPIONIC
ACID PRODUCING MICROORGANISMS


BACKGROUND OF THE INVENTION


1.   Field of the Invention

Silage can be defined as the product formed when grass crops such as alfalfa, wheat, rye and timothy, or grain crops such as corn, maize and sorghum, susceptible to spoilage by aerobic microorganisms, are stored under anaerobic conditions and undergo fermentation, for use as winter feed for ruminants.  The major objective in the ensiling process is to preserve the material with a minimum loss of dry matter and of nutrients.

There are three types of fermentation which can take place in silage:  (i) lactic fermentation; (ii) secondary (clostridial) fermentation which can occur both during and/or after the lactic fermentation; and (iii) the fermentation which occurs under aerobic conditions, when a silo is opened for feeding (so-called "after fermentation").  The latter is not a true fermentation, but an aerobic microbial degredation of residual sugars and lactic acid.

In the natural ensiling process, acid-forming bacteria present in the silage crop ferment the

MS-1188

water soluble carbohydrates (WSC) present, e.g., glucose, fructose and sucrose, to a mixture of acetic and lactic acids, predominantly lactic acid. The acetic and lactic acids reduce the pH to about 4.0.

The process is basically a lactic acid fermentation and the silage can remain stable for months if air is excluded. Thus successful fermentation depends upon a rapid decline in pH and a high concentration of lactic acid. To ensure that fermentation proceeds properly, lactic acid bacteria may be added to a fresh grass or grain, usually at the time of harvesting.

Accompanying the fermentation of the WSC are a wide range of other biochemical activities some of which are undesirable, e.g., growth of aerobic microorganisms, such as yeasts and molds and oxidative plant enzymes. Immediately after harvesting, plant enzymes are active and these, together with the growth of aerobic microorganisms, continue until anaerobic conditions are achieved and the pH of the mass decreases. If the pH of the silage is too high, rapid and extensive proteolysis takes place, in which the protein is broken down to amino acids, ammonia, carbon dioxide and amines, by clostridia bacteria present. In addition, conversion of lactate and/or WSC to butyrate by clostridia bacteria results in the spoilage of silage.

A rapid decrease in pH, i.e., a pH decrease from about 6.1 to about 4.4 within 3 days after storage is desirable. This rate of pH decrease appears to allow lactic acid and other fatty acids to predominate and inhibit the growth of undesirable microorganisms such as yeast and mold. Too rapid a pH decrease, i.e., a decrease in pH to about 4.4 within 2 days after storage is undesirable, and can be detrimental because of the possibility of preserving yeasts and

MS-1188

- 3 -

molds, which then become extremely active under aerobic conditions when the silo is opened for feeding, the so-called after-fermentation. Prevention of phase (iii) type fermentation has been difficult to achieve.


2. Description of the Prior Art

Because a properly controlled pH decrease arrests development of undesirable aerobe microorganisms, various methods for producing controlled decrease in the pH of silage have been suggested. One method is to acidify the silage with a mineral acid, e.g., phosphoric or hydrochloric acid, or with an organic acid such as formic or propionic acid. See J. Dairy Sci. 63:587-593 (1980) and J. Stored Prod. Res., 14:25-33 (1978).

As indicated earlier, after fermentation has occurred during anaerobic storage and the silo is opened, the silage will be exposed to aerobic conditions which will foster its deterioration (phase iii). This deterioration is indicated by loss of nutrient availability, surface mold growth and feed refusal by the animals, and can result in substantial economic losses. This deterioration is believed to be due to yeasts and fungi which can utilize the lactic acid present in the silage as a substrate.

It has been suggested that the aerobic deterioration of silage can be prevented or retarded by addition of propionic acid. (See J. Sci Fd Agric 26:1137-1147 (1975). The authors noted that beneficial effects of propionate addition were found in some cases, but that in other cases fairly large amounts of propionic acid did not prevent deterioration. No explanation was presented for this contradictory finding.

MS-1188

- 4 -

J. Sci Fd Agric 26:219-228 (1975) indicated that at a pH of 4, formic, acetic and propionic acids become inhibitory to yeasts and molds. However, in a study described in Mycopathologia 69:153-156 (1979) directed to aerobic deterioration of wheat and alfalfa silages, the authors investigated the inhibition of yeasts in silage in the presence of lactic and propionic acid. The authors state that lactic and propionic acids may not have an inhibitory effect (even at 3% concentration) on yeasts responsible for aerobic deterioration of silage. The authors conclude it is unlikely that the silage additives suggested in the prior art, i.e. $C_1$ - $C_{12}$ fatty acids, eg. formic, acetic and propionic acid can control aerobic deterioration of silage.

In view of this contradictory prior art as to the beneficial effect of the addition of propionic acid to silage, and in view of the difficulty entailed with the handling of such a corrosive acid to avoid hazards to personnel and to farming equipment, the use of propionic acid for prevention of aerobic deterioration of silage has not been recognized by the prior art as commercially feasible.

A widely utilized method of decreasing the pH of the crop during the ensiling process involves inoculating the silage with lactic acid-producing microorganisms; see U.S. Patent No. 4,210,673. Various silage inoculants incorporating *Lactobacillus* microorganisms are available commercially. Another method involves inoculating the silage with microorganisms which excrete amylase, protease or cellulase, to increase the soluble carbohydrate content, thus enabling the natural lactic acid bacteria present to produce lactic acid at a faster rate. Examples of

MS-1188

- 5 -

microorganisms suggested are: *Lactobacillus acidophilus*, *L. plantarum*, *L. brevis*, *Streptococcus faecium*, *S. faecalis*, *S. cremoris*, *S. diacetylactis*, *Aspergillus niger*, and *A. oryzae*.

*Lactobacillus plantarum* has been widely used as a silage inoculant. Herbage Abstracts, 42(2):105-111 (1972) indicates that *L. plantarum* is slow to produce lactic acid until the pH is under 5.0, and suggests the need for an additional lactic acid-producing microorganism. *Streptococcus faecalis* is recommended.

The prior art has not proposed a convenient treatment to avoid the disadvantages of chemical treatment and at the same time to ensure protection of the silage during both anaerobic storage and during the aerobic conditions encountered in feeding silage. The present invention provides a method for the efficacious preservation of silage, to prevent spoilage of the silage during anaerobic storage and under aerobic conditions when the silage is fed to ruminants.

## SUMMARY OF THE INVENTION

The present invention is directed to a method for controlling the fermentation of a grass or grain crop to produce silage. The method involves applying to the grass or grain crop propionic acid-producing microorganisms. The propionic acid-producing microorganisms can be applied in conjunction with lactic acid-producing microorganisms.

MS-1188

- 6 -

## DETAILED DESCRIPTION OF THE INVENTION

Propionic acid-producing microorganisms suitable for use in the present invention include: *Propionibacterium acidipropionici* (ATCC 25562), *P. jensenii* (ATCC 4964), *P. freudenreichii* subspecies *globosum* (ATCC 6207), *P. freudenreichii* subspecies *shermenii* (ATCC 8262), *Propionibacterium freudenreichii* (ATCC 31781), *Propionibacterium acidipropinoici* (ATCC 31782), *Megasphaera elsdenii* (NRRL 11052) and *Selenomonas ruminantium* (NRRL 11051).

Commercially available lactic acid bacteria which can be used in various combinations with these propionic acid-producing bacteria listed below, along with their ATCC deposit numbers are: *Lactobacillus plantarum* (14917), *L. delbrückii* (9649), *L. leichmanii* (4797), *L. lactis* (12315), *L. bulgaricus* (11842), *L. helveticus* (15009), *L. acidophilus* (4356), *L. xylosus* (16577), *L. casei* (7469), *L. fermentum* (14931), *L. brevis* (14869), *L. curvatus* (25601), *Streptococcus faecium* (19434), *S. faecalis* (19433), *S. lactis* (19435), *S. cremoris* (19257), *S. thermophilus* (19258), and *Pediococcus acidilactici* (25742).

The microorganisms of the present invention can be applied to the grass or grain crop either shortly before harvesting or immediately subsequent to harvesting. The microorganisms can be applied as a dry powder, e.g., in conjunction with a dry powder diluent, for ease of application. Alternately, the microorganisms can be added to a liquid diluent and applied as a solution.

A useful range of application rate is from about $1 \times 10^4$ to about $1 \times 10^9$ of propionic acid-producing microorganisms per gram of grass or grain crop. If

- 7 -

it is desired to use lactic acid-producing micro-
organisms in combination with propionic acid-producing microorganisms, each can be present in an
amount within this range. Based on cost/benefit
considerations, a lower amount of the above microorganism range is desirable, for example, from about
$1 \times 10^4$ to $1 \times 10^7$ microorganisms per gram. Appli-
cation at a higher rate per gram of crop is economically disadvantageous.

Application of propionic acid-producing micro-
organisms or a combination of lactic acid-producing
microorganisms in the range described above produces
a pH decrease in the silage from about 6.2 to about
4.4 within 3 days after storage under anaerobic
conditions. This rate of pH decrease has been found
to provide desirable levels of lactic fermentation
(phase i) and prevent clostridial fermentation (phase
ii) while at the same time greatly improve the stability of the silage on exposure to air (phase iii).

The method and microorganisms of the present
invention were evaluated as described in the following examples.

### EXAMPLE 1

Corn was harvested and ensiled for use as corn
silage by inoculating the corn with a propionic acid-
producing bacterium culture (*Propionibacterium freudenreichii*, subspecies *shermenii*, ATCC 8262) commercially available from Miles Laboratories, Inc.,
Elkhart, Indiana, at a level of $1.6 \times 10^9$ micro-
organisms per gram of corn. The culture was applied
as an aqueous suspension. A total of 18.16 kg of
corn was compressed into a series of individual
"packages" to a density of 0.8 g/cm$^3$. The inoculated

- 8 -

packages were packed into 5 gallon pails and sealed
air-tight to obtain anaerobic conditions and to
simulate silo storage conditions. The packages were
removed periodically and a sample for testing prepared by the following method.

A 50 gram portion of each package was suspended
in 500 ml of sterilized distilled water and mixed
with a blender for about 3 minutes. The resulting
suspension was immediately sampled for determination
of titratable acid and pH. Control samples of corn
silage, which were not treated with propionic acid-
producing bacterium culture were prepared and tested
along with inoculated samples. Results obtained are
summarized below.

## TABLE 1

### Titratable Acid (meq/g)

| Day | Untreated Control | Inoculated |
|-----|-------------------|------------|
| 0   | 1.45              | 1.38       |
| 3   | 2.28              | 2.88       |
| 6   | 3.96              | 3.67       |
| 15  | -                 | 3.52       |
| 21  | 2.83              | 5.89       |

Titratable acidity is considered an indication
of the amount of microbial activity in the silage.
During the initial stages of the ensiling process,
i.e., up to about 3 to 6 days, both the inoculated
samples and control samples had similar titratable
acidity. After 3 days, higher amounts of titratable
acidity have a "buffer" effect, which helps to prevent the pH from changing (increasing) significantly.
The higher titratable acidity of the inoculated
sample after 21 days storage compared to the

MS-1188

titratable acidity of the untreated control samples, indicates significant improvement in anaerobic storage stability.


## EXAMPLE 2

For dry matter determination, approximately 10 g of the crop described in Example 1 was placed in preweighed aluminum cans and the total weight determined. The cans were then placed in a vacuum oven and dried at 105°C overnight. The cans were removed from the oven, cooled in a desiccator and weighed to a constant weight. The dry matter (DM) content was determined by the equation:

$$DM = \frac{\text{(full weight after drying-empty can weight)}}{\text{(full weight before drying-empty can weight)}} \times 100\%$$

A 40 pound sample of corn was inoculated with 50 ml of a culture suspension with the microorganisms of Example 1, which resulted in an application level of $1.6 \times 10^9$ microorganisms per gram of corn. The dry matter was measured initially and after 21 days storage under anaerobic conditions. The dry matter loss was obtained by calculating the difference between the 21 day storage value and the original dry matter value and dividing the difference by the original dry matter value. The results obtained are summarized below in Table 2.

- 10 -

TABLE 2

Dry Matter Loss

|  | Untreated Control | Inoculated |
|---|---|---|
| Original Dry Matter (%) | 28 | 27.7 |
| 21 Day Storage (Anaerobic) | 26.55 | 26.58 |
| Dry Matter Loss (%) | 5.17 | 4.04 |

The test results shown in Table 2 indicate that inoculation of the corn with propionic acid-producing microorganisms reduces the loss of dry matter which occurs during the ensiling process, i.e., anaerobic storage. This reduction of dry matter loss provides more utilizable silage feed from a given amount of crop ensiled.

The above test results indicate that propionic acid-producing microorganisms are effective in corn silage production. Because of the economic importance of grass crops as silage, and the potential for economic losses which can occur as a result of deterioration of the silage under anaerobic conditions, the method of silage preservation of the present invention was tested on alfalfa.

EXAMPLE 3

As described hereinbefore, lactic acid-producing microorganisms have long been utilized in silage fermentation, especially to improve lactic fermentation. Also described hereinbefore were prior art studies involving the use of propionic acid treatment of silage. The following experiments were conducted to demonstrate the effect of the use of propionic acid-producing microorganisms in conjunction with

MS-1188

- 11 -

lactic acid-producing microorganisms on stability of silage after anaerobic storage, and to compare such use with an untreated control and with the application of a propionic acid solution to the crop.

Four propionic acid-producing cultures of microorganisms (identified below) were mixed individually with *Lactobacillus plantarum* at a 1:1 cell number ratio. Alfalfa was cut in midbloom, wilted to about 30% DM and inoculated at a level of $1 \times 10^7$ microorganisms/g/strain. The inoculated alfalfa was packed in 30 gallon drums and 5 gallon pails. Anaerobic conditions were obtained by placing sand-filled bags on top of the alfalfa before covering the drums and pails with tight-fitting lids. Control samples of untreated alfalfa and alfalfa sprayed with propionic acid at a final concentration of 0.5 percent (v/w) were packed in pails and aerated after 21 days.

After 21 days storage under anaerobic conditions, the drums were opened and the silage placed into small pails and thoroughly aerated, to simulate the conditions which occur after anaerobic treatment of silage when a silo is opened for feeding. The samples were periodically tested for mold and yeast counts after exposure to air.

The yeast and mold counts can be determined by the conventional method of plating out a given amount of sample on a selective agar plate and counting the colony forming units (CFU), expressed as the log(CFU/ml).

The test results obtained are summarized in Table 3 below.

MS-1188

## TABLE 3

### ALFALFA STABILITY

[Yeast and Mold Count, cells/gram; log(CFU/ml)]

Days Air Exposure After 21 Day Anaerobic Storage

| | Untreated Control | Propionic Acid Spray Control | #1 | #2 | #3 | #4 |
|---|---|---|---|---|---|---|
| Day 0 | <2.00<br><2.00 | 3.52<br>3.40 | <2.00<br><2.00 | <2.00<br>2.00 | 2.00<br><2.00 | <2.00<br><2.00 |
| Day 1 | 3.00<br>2.85 | 4.62<br>4.59 | <2.00<br>2.00 | <2.00<br>2.00 | 2.30<br>2.30 | 2.00<br><2.00 |
| Day 2 | 3.91<br>3.88 | 5.81<br>5.85 | 2.00<br>2.00 | 2.30<br>2.30 | 3.00<br>3.40 | 2.30<br>2.00 |
| Day 3 | 4.64<br>4.53 | 6.74<br>6.72 | 2.30<br>2.30 | 3.26<br>3.00 | 3.75<br>4.40 | 2.85<br>2.85 |
| Day 4 | 5.59<br>5.58 | 6.97<br>6.95 | 2.30<br>2.48 | 3.34<br>3.00 | 3.00<br>4.77 | 3.85<br>3.39 |
| Day 5 | 6.61<br>6.52 | 8.18<br>8.23 | 3.00<br>2.30 | 3.59<br>3.04 | 2.95<br>5.44 | 3.00<br>4.04 |
| Day 6 | 7.66<br>7.59 | 8.54<br>8.43 | 3.43<br><2.00 | 2.95<br>3.85 | 3.00<br>6.69 | 2.00<br>4.75 |

Sample #1 - *L. plantarum* + *Propionibacterium jensenii* (ATCC 4964)
Sample #2 - *L. plantarum* + *Propionibacterium acidipropionici* (ATCC 31782)
Sample #3 - *L. plantarum* + *Megaspharea elsendii* (NRRL 11052)
Sample #4 - *L. plantarum* + *Propionibacterium freudenreichii* (ATCC 31781)

- 13 -

The test results summarized in Table 3 indicate that the samples sprayed with propionic acid solution had a higher amount of yeast and mold growth during the anaerobic storage than did the mixed microorganism cultures or the untreated control. Treatment of the silage with the mixed microoganism cultures of #1, #2, #3 and #4 effectively lowered the yeast and mold growth present in the silage during anaerobic storage, as indicated by the data for day 0.

Because aerobic exposure during feeding usually does not exceed about 3 to 4 days, it is important that yeast and mold growth are inhibited during this period. The test data indicates excellent inhibition of yeast and mold growth up to day 5 of aerobic exposure; subsequent to day 5, samples 1, 2, 3 and 4 began to exhibit a somewhat erratic increase in yeast and mold counts.

Visual observation of the silage after 9 days exposure to air indicated that treatment #1 (*L. plantarum* and *Propionibacterium jensenii*) and #4 (*L. plantarum* and *Propionibacterium freudenreichii*) were most effective - no visible growth of mold or yeast spots was present on the surface. Treatment #2 (*L. plantarum* and *Propionibacterium acidipropionici*) and #3 (*L. plantarum* and *Megaspharea elsendii*) had pockets of mold on the surface, but this did not represent serious degradation. In contrast, the untreated control and the control treated with propionic acid solution were both covered with heavy mold growth. The control silage was considered spoiled on day 5, while silage treated according to the present invention was stable after 9 days exposure.

These test results indicate that a mixture of propionic acid-producing and lactic acid producing microorganisms is efficacious in preventing yeast and

- 14 -

mold-caused deterioration of silage under aerobic conditions even though propionic acid solution appeared to accelerate yeast and mold growth during anaerobic and aerobic storage.

As indicated earlier, conversion of lactate and/or WSC to butyrate by clostridia bacteria present results in spoilage of silage. The clostridia population in silage, therefore, usually provides an indication of the extent of deterioration of the silage under anaerobic conditions. The test results showing the clostridia bacteria population during anaerobic storage are summarized below in Table 4.

## ·TABLE 4

Alfalfa Clostridia Counts - Anaerobic Storage (cells/gram)

|  | Untreated Control | #1 | #2 | #3 | #4 |
|---|---|---|---|---|---|
| Day 0 | 5.56<br>5.62 |  |  |  |  |
| Day 1 | 8.49<br>8.60 | 8.04<br>7.23 | 8.63<br>8.52 | 8.15<br>8.23 | 7.92<br>9.02 |
| Day 2 | 8.51<br>8.69 | 7.63<br>7.06 | 8.52<br>8.49 | 7.04<br>7.16 | 7.58<br>6.97 |
| Day 3 | 8.55<br>8.54 | 6.95<br>7.39 | 7.54<br>7.48 | 6.89<br>6.59 | 7.20<br>6.68 |
| Day 4 | 8.49<br>8.63 | 6.68<br>7.25 | 7.23<br>7.54 | 6.65<br>6.59 | 6.88<br>6.69 |
| Day 7 | 8.21<br>7.48 | 6.55<br>7.12 | 7.31<br>7.48 | 6.54<br>6.58 | 6.64<br>6.39 |
| Day 14 | 8.11<br>6.98 | 6.30<br>6.88 | 7.25<br>7.56 | 6.43<br>6.41 | 6.26<br>6.42 |
| Day 21 | 7.18<br>6.19 | 6.79<br>6.61 | 6.71<br>6.80 | 5.76<br>5.85 | 5.90<br>5.69 |
| Terminal | 6.53<br>7.08 | 6.28<br>6.02 | 6.48<br>6.41 | 6.26<br>6.04 | 5.64<br>5.91 |

0071858

- 16 -

The microbial cultures containing the propionic acid-producing microorganisms produced a more rapid inhibition of clostridia bacteria than was obtained in untreated control samples. The mixed culture of #3 (*L. plantarum* and *Megaspharea elsendii*) appeared to be the most effective in producing the most rapid decrease from Day 1 to Day 21.

MS-1188

- 17 -

WHAT IS CLAIMED IS:

1. A method for controlling the fermentation of a grass or grain crop to produce silage which comprises applying to the grass or grain propionic acid-producing microorganisms and storing said crop under anaerobic conditions.

2. The method as claimed in claim 1 wherein the microorganism is selected from the group consisting of *Propionibacterium acidipropionici*, *P. jensenii*, *P. freudenreichii*, *P. freudenreichii*, *Megasphaera elsdenii* and *Selenomonas ruminantium*.

3. The method as claimed in claim 1 wherein the microorganism is provided in the amount of from about $1 \times 10^4$ to $1 \times 10^9$ microorganisms per gram of grass or grain.

4. The method as claimed in claim 1 wherein the microorganisms are added after harvesting said crop.

5. The method as claimed in claim 1 wherein additionally lactic acid-producing microorganisms are applied.

6. The method as claimed in claim 5 wherein the lactic acid-producing microorganisms are *Lactobacillus plantarum*.

7. The method as claimed in claim 6 wherein the lactic acid-producing microoganisms are provided in the amount of from about $1 \times 10^4$ to $1 \times 10^9$ microorganisms per gram of grass or grain.

8.	A method for controlling the fermentation of a grass or grain crop to produce silage which comprises the steps of applying to the grass or grain from about $1 \times 10^4$ to $1 \times 10^9$ microoganism per gram of grass or grain of propionic acid-producing and lactic acid-producing microoganisms, respectively.

9.	The method as claimed in claim 8 wherein the propionic acid-producing microorganism is selected from the group consisting of *Propionibacterium acidipropionici, P. jensenii, P. freudenreichii,* subspecies *globosum, P. freudenreichii,* subspecies *shermenii, Megasphaera elsdenii* and *Selenomonas ruminantium* and the lactic acid producing micro-organism is *Lactobacillus plantarum.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CHEMICAL ABSTRACTS, vol. 66, no. 1, 2nd January 1967, page 165, no. 1737v, Columbus Ohio (USA); K.A.II'INA et al.: "Effect of propionibacterium shermanii on the constitution of organic acid in silage". & TR. INST. MIKROBIOL. i VIRUSOL., AKAD. NAUK KAZ. SSR 9, 29-35. *Abstract* | 1,3-7 | A 23 K 3/02 A 23 K 3/00 |
| X | CHEMICAL ABSTRACTS, vol. 84, no. 25, 21st June 1976, page 425, no. 178280p, Columbus Ohio (USA); D.L.SHAMIS et al.: "Ensilage of corn using a dry ferment of propionic acid bacteria". & AKTUAL. PROBL. S-KH. MIKROBIOL. 1974, 112-17. *Abstract* | 1,3-4 | |
| X | CHEMICAL ABSTRACTS, vol. 60, no. 2, 20th January 1964, col. 2061c, Columbus Ohio (USA); D.L.SHAMIS et al.: "Role of propionic acid bacteria in ensilage of maize". & TR. INST. MIKROBIOL. i VIRUSOL., AKAD. NAUK KAZ. SSR 7, 3-9(1963). *Abstract* | 1-3-4 | A 23 K |

TECHNICAL FIELDS SEARCHED (Int. Cl. ³)

---    -/-

The present search report has been drawn up for all claims

| Place of search | Date of completion of the search | Examiner |
|---|---|---|
| THE HAGUE | 12-11-1982 | GALLIGANI L. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| X | CHEMICAL ABSTRACTS, vol. 72, no. 25, 22nd June 1970, page 233, no. 131237s, Columbus Ohio (USA); E.G.KONOPLEV et al.: "Utilization of a mixed culture of propionic acid bacteria and yeasts in the ensiling of corn". IZV. AKAD. NAUK SSSR, SER. BIOL. 1970,(1), 142-4. *Abstract* | 1,3-4 | |
| X | CHEMICAL ABSTRACTS, vol. 74, no. 23, 7th June 1971, page 195, no. 122200p, Columbus Ohio (USA); A.V.SIZOVA: "Use of propionic acid bacteria in animal husbandry". & VESTN. SEL'SKOKHOZ. NAUKI(MOSCOW) 1971, 16(2), 85-9. *Abstract* | 1,3-4 | |
| A | CHEMICAL ABSTRACTS, vol. 77, no. 25, 18th December 1972, page 300, no. 163230d, Columbus Ohio (USA); K.A.II'INA: "Ensilage of sunflowers by using bacterial cultures". & TR. INST. MIKROBIOL. VIRUSOL., AKAD. NAUK KAZ. SSR 1970, 16, 49-55. *Abstract* | 1,3-4 | TECHNICAL FIELDS SEARCHED (Int. Cl. 3) |

---  -/-

The present search report has been drawn up for all claims

| Place of search | Date of completion of the search | Examiner |
|---|---|---|
| THE HAGUE | 12-11-1982 | GALLIGANI L. |

## DOCUMENTS CONSIDERED TO BE RELEVANT

Page 3

| Category | Citation of document with indication, where appropriate, of relevant passages | Relevant to claim | CLASSIFICATION OF THE APPLICATION (Int. Cl. ³) |
|---|---|---|---|
| A | CHEMICAL ABSTRACTS, vol. 87, no. 13, 26th September 1977, page 514, no. 100958h, Columbus Ohio (USA); T.FRACZEK et al.: "The feed value of potato silage enriched with vitamin B12 by means of the propionibacterium petersoniiculture". & ACTA ALIMENT. POL. 1977, 3(1),3-10. *Abstract* | 1,3-4 | |
| D,A | HERBAGE ABSTRACTS, vol. 42, no. 2, June 1972, pages 105-111, Hurley (GB); M.K.WOOLFORD: "Some aspects of the microbiology and biochemistry of silage making". | | |

TECHNICAL FIELDS SEARCHED (Int. Cl. ³)

The present search report has been drawn up for all claims

| Place of search THE HAGUE | Date of completion of the search 12-11-1982 | Examiner GALLIGANI L. |
|---|---|---|